Europäisches Patentamt

European Patent Office

Office européen des brevets

(11) Publication number: **0 463 631 A2**

## EUROPEAN PATENT APPLICATION

(21) Application number: **91110774.6**

(22) Date of filing: **28.06.91**

(51) Int. Cl.⁵: **G11B 21/02**, G11B 21/16,
G11B 21/08, G11B 5/55

(30) Priority: **29.06.90 DE 4020876**

(43) Date of publication of application:
**02.01.92 Bulletin 92/01**

(84) Designated Contracting States:
**DE FR GB NL**

(71) Applicant: **Digital Equipment International GmbH**
**Sudetenstrasse 5**
**W-8950 Kaufbeuren(DE)**

(72) Inventor: **Grapenthin, Hans, c/o Digital Equipment Int. GmbH**
**Sudentenstrasse 5**
**W-8950 Kaufbeuren(DE)**

(74) Representative: **Betten & Resch**
**Reichenbachstrasse 19**
**W-8000 München 5(DE)**

(54) Positioning device for the disc running gear of a disc store.

(57) The swinging body 10 of a positioning device of a disc store is constructed of individual flat components connected with one another, particularly of ceramics which are individually ground or lapped to their final dimensions before assembly. Individually, the flat components comprise the positioning arms 14, distance discs 16 arranged between the positioning arms and the carrier arms 18 for the magnetic coil at both ends.

Fig. 1

Rank Xerox (UK) Business Services

The invention relates to a positioning device for the disc running gear of a disc store, particularly a magnetic or optical disc store, with a base body arranged movably with respect to the disc stack and with a plurality of positionable arms constructed on the base body which, via head carriers, carry the read/write heads.

As in disc stores, technical development continuously moves to higher storage capacities, the mechanical construction of the positioning systems must be matched to this continuous further development, wherein a high storage capacity requires a compact construction of the disc store with very small disc separation. Fast access time requires low inertia positioning systems and a short swinging in time after positioning. High resonant frequencies of the positioner are a requirement for the construction of a rapid servo system with good signal following properties and a short response time.

Two different types of positioning device are known, namely linear positioners and rotational positioners. Linear positioners consist of a positioning carriage carrying the magnetic head positioning arms which, for example, are moved to the magnetic disc stack radially by means of a drive pulse system during track selection. Rotational positioners have a swinging body which is mounted rotationally movably on a positioning axis arranged parallel to the axis of the disc stack. This swingable body has on one side the positioning arms carrying the magnetic heads and on the other side a pair of carrier arms which lie opposite the swinging arms with respect to the positioning axis. The carrier arms carry either a coil which influences a fixed magnet or a magnet wherein, in this case, the excited coil is fixed.

In more recent constructions, a monolithic body with integral positioning arms and integral carrier arms has been used as a swinging body, which has also been denoted as an "E-block". Such an E-block has the advantage that smaller inner stresses arise and the number of connections is minimised, whereby the swinging in time of the swinging body can be maintained very small.

With increasing miniaturisation of the disc store or, indeed, of the positioning device, the manufacture of a monolithic E-block is, however, exceptionally difficult, laborious and accordingly expensive.

Accordingly, at the forefront is the problem underlying the invention of creating a positioning device of the initially described type in which the advantages of the monolithic E-block can essentially be maintained but in which the necessary high precision of the complex structure can be achieved in a simpler and accordingly more cost favourable fashion.

This problem is essentially solved in accordance with the invention in that the base body is composed of flat constructional pieces which are arranged parallel to one another, wherein neighbouring constructional pieces are connected with one another, and in that the flat constructional pieces comprise first components which form the positioning arms and second components which form distance discs arranged between the individual positioning arms. Preferably, in the case of the construction of positioning devices as rotational positioners, the flat components include, furthermore, third components which form the carrier arms for the magnet unit.

The construction of the E-block in accordance with the invention has the advantage that the individual flat components can be made comparatively simply and cost favourably with high precision and can be ground or lapped to the tightest tolerances.

After manufacturing the individual flat components such as positioning arms, carrier arms and distance discs, the individual components are assembled together in appropriate fashion into a pile and connected with one another, wherein, as connection technique, adhesion, soldering or hard soldering can be used depending upon the material used. If, as connection, an adhesive connection is chosen, cyanoacrylates, epoxy resins or polyurethanes can be used.

As materials for the flat components, there are metals, fibre reinforced plastics and particularly also ceramics. The individual flat elements such as positioning arms, carrier arms and distance discs can, in the case of a metal, be made by pressing, casting, forging or stamping, and, in the case of ceramics or plastics, by injection moulding, wherein in the case of ceramic components additionally isostatic pressing can be used. Furthermore, for ceramics and metal, cutting out the components from plates by means of a laser can be an appropriate manufacturing process. In all the noted cases, the crude components are additionally ground and/or lapped to the final thickness.

As particularly preferred material for the E-block of the positioning device in accordance with the invention, ceramics are envisaged. Ceramics are materials with very high stiffness and comparatively low density, from which decisive advantages emerge for the positioning unit of the disc store: because of the lighter weight of the E-block and the correspondingly smaller inertia, systems can be made with better positioning times. From the higher stiffness of the material there also arises a smaller swinging in time after positioning. In addition, with an E-block of ceramics, systems with an increased track density can also be made, and because of higher resonances, a higher servo throughput frequency is made possible, whereby a more rapid reaction to position changes is possible. More rapid swinging in on to the track also means a smaller track edge necessary. Finally the advantage of the ceramic material can also be used in order to be able to develop a structure with thin arms, whereby, on the one hand, even the same resonances as in the case of metal can be accepted, but on the other hand with the same space requirements, additional arms can also be provided, whereby, in this latter case, the storage density of the system can be increased. As suitable ceramic materials there are, in particular, SiN, SiC, BC, $Al_2O_3$, ZrO as well as mixed ceramics from these.

In the case of the present invention, both the monolithic E-block in accordance with the state of the art, which normally is made of aluminium or magnesium, can be replaced by a structure of parallel plate-like piled elements, particularly of a ceramic material, wherein by suitable working of the individual plate-shaped elements in a comparatively simple and cost favourable fashion, a complex structure with high precision can be made. The advantages of a monolithic structure of the E-block in accordance with the state of the art remain essentially maintained, particularly also the structural modes. The lighter weight and the higher stiffness of the ceramic material give additional advantages with respect to the known constructions with respect to resonances, inertial forces and swinging in time. An additional advantage emerges in that with just a few types of component, namely positioning arms, carrier arms and distance rings, the most varied structures can be made up.

The head carriers are normally adhered or locked by ball catches to the ends of the positioning arms. Adhering the head carriers to the positioning arms brings with it the disadvantage that subsequent working is not possible. A ball catch in the case of a positioning arm of ceramic is likewise problematic because of the high stiffness and low tensile strength. In a particularly preferred further development of the invention, it is accordingly provided that the head carriers for the read/write heads are fixed to the respective positioning arms by means of pins of memory metal, which free the carrier arms only on local cooling of the pins.

Further advantageous features of the invention are evident from the remaining sub-claims as well as from the subsequent description in which a preferred embodiment of the invention is described in more detail with reference to the drawing. In the drawing, there are illustrated in semi-schematic form:

Fig. 1    a perspective illustration of the swinging body (E-block) of the positioning device in accordance with the invention,

Fig. 2    a vertical section through the swinging body in accordance with Fig. 1,

Fig. 3    a section through the end of a positioning arm of the swinging body in accordance with Fig. 1 carrying a head carrier together with a magnetic head, and

Fig. 4    a plan view on the head carrier together with magnetic head in accordance with Fig. 3.

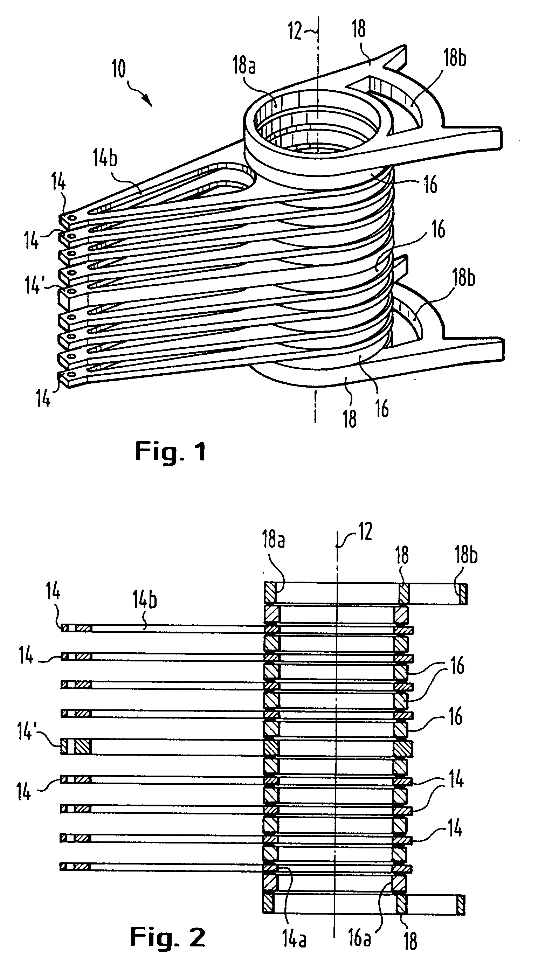

In a not illustrated housing of a magnetic disc store of as such known construction, a swinging body indicated overall with the reference number 10, a so-called E-block, is rotatably mounted about an axis 12. The E-block 10 comprises parallel positioning arms 14 spaced one below the next, distance discs 16 as well as outer carrier arms 18. As is evident from Figs. 1 and 2, the positioning arms, the distance discs and the carrier arms form a pile of parallel components which, in the case of the embodiment described, consists of ceramic and are fixed to one another by means of soldering. The positioning arms and the distance discs 16 are arranged alternately and both of the outer carrier arms 18, which carry the not illustrated magnetic coils, are arranged diametrically opposed to the positioning arms 14 with respect to the axis 12.

All components 14, 16, 18 have a section adjacent the axis which has a central circular throughhole 14a, 16a or 18a respectively. All throughholes 14a, 16a and 18a are arranged concentrically with respect to the axis 12. The throughholes 14a, 16a and the positioning arms 14 or distance discs 16 respectively each have the same diameter, while the diameter of the throughholes 18a in the carrier arms 18 is somewhat larger. The throughholes 18a and the carrier arms 18 each serve for the receipt of a bearing by means of which the E-block 10 is swingably mounted around the axis 12 on the not illustrated apparatus housing.

The thickness of the individual components 14, 16, 18 can vary depending upon the requirements; as is evident, for example, from Figs. 1 and 2 in the illustrated embodiment the thickness of the centre servo positioning arm 14' is greater than the thickness of the remaining positioning arms.

The size of the throughholes 14a and 16a is so chosen that the abutting surfaces of neighbouring components are sufficiently large in order with the desired precise registration of the components to guarantee secure connection of neighbouring components; on the other hand, the throughholes should be constructed as large as possible in order to reduce the mass of the block 10 as far as possible. Apertures 14b and 18b respectively in positioning arms 14 and the carrier arms 18 also serve to reduce the mass.

The individual components 14, 16, 18 can be made by injection moulding and then subsequently worked, particularly by lapping, in order, in this fashion, to provide components to exceptionally narrow tolerances. The individual components are then piled in the required sequence and simultaneously centred, wherein, on account of their lapped surfaces, the radial position with reference to the axis 12 adjusts itself. The exact angular position of the positioning arms 14 or carrier arms 18 can be adjusted via reference surfaces, for example via the end surface turned away from the axis 12 of each positioning arm 14 or by means of a given side surface of the positioning arms. In the so-adjusted configuration, the individual components 14, 16 and 18 are then connected with one another, for example by means of soldering.

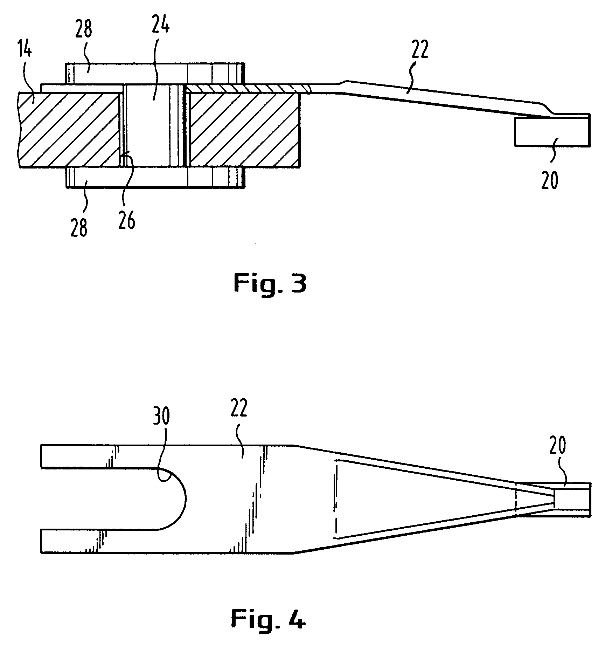

For fixing the head carriers 22 carrying the magnetic heads 20 (compare Figs. 3 and 4) to the ends of the positioning arms 14, pins 24 of memory metal are provided, which are set in corresponding bores 26 in the end regions of the positioning arms 14 and which have at each end an enlarged pin head 28. The head carrier 22 of overall arm shape, which carries the magnetic head 20 at its one free end, is at its other end constructed forked in such a fashion that a slot 30 arises, the width of which is somewhat greater than the diameter of the pin 24 so that the forked end of the head carrier 22 can be pushed in between the pin head 28 in the oppositely lying surface of the positioning arm 14, laterally surrounding the pin 24, and can be clamped between pin head 28 and positioning arm 14.

The pin 24 consists of memory metal such as, for example, of the alloys CuZnAl, CuAlNi or NiTi. At normal working temperatures of the system, the pins 24 clamp the head carrier 22 firmly between pin head 28 and positioning arm 14. On local cooling of the pin 24, the length of the pin 24 increases and the head carrier 22 can accordingly be removed, exchanged or readjusted.

Such a pin which is originally located only in the austenite phase, lengthens on low temperatures below the transition temperature Ms with the formation of a martensite phase. The transition temperature Ms must lie below the lowest operating or storage temperature of the disc store. The pin must first, for example, be heated electrically up to the conversion temperature Af, whereby the memory effect is initiated by a phase transition into the austenite phase. The pin thereafter attempts to pull itself back again to its original shape and thereby transfers the holding force to the head carrier. For releasing the fixing, the pin is locally cooled, whereon it expands itself again.

Although the present invention has been described in connection with a rotational positioner, it is to be understood that it can also be used in the case of a linear positioner. Furthermore, the positioning device in accordance with the invention can obviously also be used with advantage in connection with an optical disc store.

**Claims**

1. Positioning device for the disc running unit of a disc store, with a base body (10) arranged with respect to the disc stack and with a plurality of positioning arms (14) constructed on the base body which carry the read/write heads (20) via head carriers (22), characterised in that the base body (10) is composed of flat components (14 to 18) which are arranged parallel to one another, wherein neighbouring components are connected with one another, and that the flat components comprise first components (14) which constitute the positioning arms and second components (16) which form distance discs (16) arranged between the indiviual positioning arms (14).

2. Positioning device of the rotary positioner type in accordance with Claim 1, wherein the base body is constructed as a swinging body (10) mounted in rotationally movable fashion on a positioning axis (12), the carrier arms constructed on the rotatable body for carrying a magnetic unit serving to drive the swingable body, characterised in that the flat components (14 to 18) comprise third components which form the carrier arms (18).

3. Positioning device according to Claim 2, characterised in that the carrier arms, seen in the direction of the positioning axis (12), are arranged at both ends of the swinging body (10).

4. Positioning device according to one of the preceding Claims, characterised in that the flat components (14 to 18) are provided with throughholes (14a, 16a, 18) concentric with respect to the positioning axis (12).

5. Positioning device according to Claims 3 and 4, characterised in that the bores (14a, 16a) in the positioning arms (14) and distance discs (16) are of the same size among themselves.

6. Positioning device according to Claim 4 or 5, characterised in that the throughholes (18a) in the end carrier arms (18) are larger than the throughholes (14a, 16a) in the positioning arms (14) and distance discs (16).

7.     Positioning device according to one of the preceding Claims, characterised in that the flat components (14, 16, 18) consist of ceramic.

8.     Positioning device according to one of the preceding Claims, characterised in that the flat components (14, 16, 18) are ground and/or lapped to their final dimensions.

9.     Positioning device according to one of the preceding Claims, characterised in that neighbouring components (14, 16, 18) are adhered with one another.

10.    Positioning device according to one of Claims 1 to 8, characterised in that neighbouring components (14, 16, 18) are connected together by a soldering or hard soldering process.

11.    Positioning device according to one of Claims 1 to 6, characterised in that the flat components (14, 16, 18) consist of fibre reinforced plastics.

12.    Positioning device according to one of the preceding Claims, characterised in that the head carriers (22) for the read/write heads (20) are fixed to the respective positioning arms (14) by means of pins (24) of memory metal, which release the head carriers (22) only on local cooling of the pins (24).

13.    Positioning device according to Claim 12, characterised in that each positioning arm (14) has in the region of its free end an aperture (26) in which the pin (24) is arranged wherein the end of the head carrier (22) is clamped between the positioning arm (14) and a pin head (28).

14.    Positioning device according to Claim 13, characterised in that the clamped end of the head carrier (22) is constructed in a forked shape and surrounds the pin (24) laterally.

15.    Disc running unit of a disc store, characterised in that it has a positioning device in accordance with one of Claims 1 to 14.

16.    Disc store with a disc running unit, characterised in that it has a positioning device according to one of Claims 1 to 14.

**Fig. 1**

**Fig. 2**

Fig. 3

Fig. 4